# EUROPÄISCHE PATENTSCHRIFT

(11) **EP 2 715 920 B1**
(45) Veröffentlichungstag und Bekanntmachung des Hinweises auf die Patenterteilung: **05.05.2021**
(21) Anmeldenummer: 12738383.4
(22) Anmeldetag: 31.05.2012
(51) Int. Cl.: H02K 7/09, F16C 32/04, H02K 21/44, H02K 19/10, H02K 37/20

(54) **ELEKTRISCHE MASCHINE MIT EINEM MAGNETISCH GELAGERTEN RELUKTANZLÄUFER**
ELECTRIC MACHINE HAVING A MAGNETICALLY SUPPORTED RELUCTANCE ROTOR
MOTEUR ÉLECTRIQUE COMPRENANT UN ROTOR À RELUCTANCE À SUSPENSION MAGNÉTIQUE

(30) Priorität: 31.05.2011 AT 8032011
(43) Veröffentlichungstag der Anmeldung: 09.04.2014
(73) Patentinhaber: Johannes Kepler Universität Linz, 4040 Linz (AT)
(72) Erfinder: GRABNER, Herbert, A-4060 Leonding (AT); AMRHEIN, Wolfgang, A-4100 Ottensheim (AT); GRUBER, Wolfgang, A-3300 Amstetten (AT); SILBER, Siegfried, A-Kirchschlag 4202 (AT)
(74) Vertreter: Jell, Friedrich
(86) Internationale Anmeldenummer: PCT/AT2012/050077
(87) Internationale Veröffentlichungsnummer: WO 2012/162716

(56) Entgegenhaltungen:
- EP-A2- 1 072 807
- WO-A1-2008/109834
- WO-A1-2010/137766
- DE-A1- 10 062 753
- GB-A- 2 376 505
- US-A- 5 300 842
- US-A- 5 424 595
- US-A1- 2004 245 877

## Beschreibung

### Technisches Gebiet

Die Erfindung betrifft eine elektrische Maschine mit einem magnetisch gelagerten Reluktanzläufer und mit einem Pole ausbildenden Stator, der wenigstens eine elektrische Statorwicklung zur Erzeugung eines elektromagnetischen Steuerflusses und mindestens einen Permanentmagneten zur Erzeugung eines permanentmagnetischen Flusses aufweist, wobei die elektrische Maschine elektromagnetische und permanentmagnetische Kreise aufweist, die sich läuferwinkelabhängig zur Drehmoment- und/oder zur radialen Tragkraftbildung zumindest in Teilbereichen des Luftspalts überlagern.

### Stand der Technik

Um bei einem Reluktanzantrieb eine Tragkraft für eine radiale magnetische Lagerung seines Reluktanzläufers erzeugen zu können, ist es aus dem Stand der Technik bekannt (DE10062753A1), einen elektromagnetischen Steuerfluss im Luftspalt mit wenigstens zwei Permanentmagnetflüssen zu überlagern, um damit auf einer Polseite eine Stärkung und auf einer anderen Polseite bzw. auf anderen Polseiten eine Schwächung der Flussdichte des elektromagnetischen Steuerfluss zu erreichen. Dadurch kommt es zur Ausbildung einer resultierenden Kraft, mit einem über die Rotorumfang summierten, im Wesentlichen in eine Richtung weisenden Kraftvektor zur beispielsweisen Steuerung einer radialen Position des Reluktanzläufers gegenüber dem Stator. Um eine Stärkung und eine Schwächung der Flussdichte zu erreichen, werden die permanentmagnetischen Pole zwischen elektromagnetischen Polen angeordnet, wobei beide Polearten dem Stator zugeordnet sind. Nachteilig muss durch solch eine Polanordnung ein erhöhter konstruktiver Aufwand betrieben werden, um die magnetischen Verluste aufgrund erhöhter Flusskreiswege gering zu halten. Außerdem bedarf es für die Regelung der magnetischen Lagerung sowie für die Erzeugung des Drehmoments vergleichsweise hohe Leistungsdichten, was eine Steuerung derartiger elektrischer Maschinen erschweren kann.

Weitere elektrische Maschinen sind aus der WO2008/109834A1, US2004/245877A1, GB2376505A, EP1072807A2, US5300842A, WO2010/137766A1 und US5424595A bekannt.

Eine elektrische Maschine nach den Oberbegriffen der Ansprüche 1, 2 und 3 ist aus der DE10062753A1 bekannt.

### Darstellung der Erfindung

Die Erfindung hat sich daher ausgehend vom eingangs geschilderten Stand der Technik die Aufgabe gestellt, eine elektrische Maschine mit einem magnetisch gelagerten Reluktanzläufer derart zu verbessern, dass durch vereinfachte Konstruktionsverhältnisse magnetische Verluste verringert werden und/oder ein verbessertes Drehmomentenverhalten der elektrischen Maschine möglich wird. Außerdem soll eine vereinfachte Steuerung der elektrischen Maschine, insbesondere der magnetischen Lagerung des Reluktanzläufers möglich werden.

Die Erfindung löst die gestellte Aufgabe durch die Merkmale des Anspruchs 1, 2 oder 3.

Schließt sich bei getrennter Betrachtung der magnetischen Kreise (permanentmagnetischer und elektromagnetischer Kreis) zumindest bei einem Läuferwinkel ein wesentlicher Teil wenigstens eines magnetischen Flusses innerhalb einer permanentmagnetischen, gleiche Polarität aufweisenden Polausbildung, innerhalb einer elektromagnetischen, gleiche Polarität aufweisenden Polausbildung oder innerhalb eines zusammenhängenden und wicklungsfreien, insbesondere ferromagnetischen, Statorsektors, über den Luftspalt und über den Reluktanzläufer zu einem magnetischen Kreis, dann kann auf konstruktiv einfache Weise eine verbessert fokussierte Kraftrichtung für die magnetische Lagerung ermöglicht werden, weil der magnetische Kreis in engen konstruktiven Grenzen gehalten werden kann. Dabei ist es unerheblich, ob sich der permanentmagnetische oder elektromagnetische Kreis in dieser durch ein oder mehrere Pole ausgebildeten Grenze hält, entscheidend für eine gegenüber dem Stand der Technik verbesserte magnetische Lagerung ist, dass durch solch eine geschaffene Begrenzung eine geringere Flussaufteilung über die flussführenden Elemente der elektrischen Maschine und damit eine hohe krafterzeugenden Lagerkomponente ermöglicht werden kann. Eine solche Begrenzung kann beispielsweise konstruktiv einfach über magnetische Flussbarrieren im Stator und/oder auch über eine Anordnung der Permanentmagnete an Zähnen des Stators, insbesondere an Polschuhen des Stators etc. geschaffen werden. Die Überlagerung der Flüsse kann natürlich bezüglich deren Verteilung an Amplituden und/oder Phase vom Winkel des Reluktanzläufers gegenüber dem Stator abhängig sein bzw. sich läuferwinkelabhängig ausprägen. Die Erfindung kann sich daher neben seiner konstruktiven Einfachheit auch dadurch auszeichnen, dass mit einem vergleichsweise geringen Aufwand ein elektromagnetischer Steuerfluss erzeugt werden kann, der für eine ausreichende Krafterzeugung zur verbesserten magnetischen Lagerung seines Reluktanzläufers dienen kann. Außerdem können sich durch die so verringerten magnetischen Fußwege die Spannungsabfälle reduzieren, was zu verringerten Verlusten an der elektrischen Maschine führen kann.

Im Allgemeinen wird weiter erwähnt, dass sich die Erfindung besonders durch eine Ausbildung von elektromagnetischen und/oder permanentmagnetischen Flüssen um den Statorumfang auszeichnen kann. Vorzugsweise ist dieser Ausbildung heteropolar um den Statorumfang (entlang des Umfangs wechselnde Polarität). Weiter wird darauf im Allgemeinen hingewiesen, dass der Reluktanzläufer als gezahnter Läufer ausgeführt oder mit Hilfe von Ausnehmungen im ferromagnetischen Material gebildete Flusssperren aufweisen kann, die für den magnetischen Fluss in d- und q-Richtung unterschiedliche magnetische Widerstände bilden. Außerdem sind Reluktanzläufer mit (Hybridläufer, wie man z.B. sie von Schrittmotoren kennt) und ohne Permanentmagnete vorstellbar.

Um den elektrischen Steuerfluss in engen Grenzen zu halten kann vorgesehen sein, dass wenigstens ein Permanentmagnet zwischen zwei angrenzenden ferromagnetischen Statorsegmenten wenigstens teilweise zur Ausbildung einer zumindest teilweisen Flussbarriere für die elektromagnetischen Steuerflüsse vorgesehen ist. Die derart angeordneten Permanentmagnete leiten nämlich aufgrund ihrer vergleichsweise geringen Permeabilität den elektromagnetischen Steuerfluss in eine diese umgehende Flussrichtung, so dass deren Erstreckung auf andere Statorsegmente eingeschränkt werden kann. Ein besonders konzentrierter Steuerfluss kann so für das Statorsegment ermöglicht werden, wodurch die Kraftwirkung fokussiert und die Steuerung bzw. die Regelung der magnetischen Lagerung vereinfacht werden kann.

Konstruktive, sättigungs- und montagetechnische Einfachheit am Stator kann ermöglicht werden, wenn angrenzende Statorsegmente über mindestens einen Sättigungssteg mechanisch miteinander verbunden sind. Außerdem kann ein derartiger einteiliger Stator beim Zusammenbau der elektrischen Maschine sowie bei Wartungsarbeiten einfacher handhabbar sein, was für eine Kostenreduktion genützt werden kann.

Schließt sich zumindest ein Teil des permanentmagnetischen Flusses über den Reluktanzläufer, über den Luftspalt und über wenigstens einen wicklungsfreien ferromagnetischen Zahn des Stators, so kann der permanentmagnetische Fluss in engen Erstreckungsgrenzen gehalten werden, was für vergleichsweise hohe Flussdichten sorgen kann. Daher kann auch selbst mit Permanentmagneten, die eine verminderte Flussdichte aufweisen, ein ausreichender permanentmagnetischer Fluss ermöglicht werden. Hinzu kommt, dass durch solch einen Fluss eine vergleichsweise gute Stabilisierung der passiven Freiheitsgrade des Läufers ermöglicht werden kann.

Derselbe Effekt hinsichtlich der Stärke des permanentmagnetischen Flusskreises kann ermöglicht werden, wenn sich zumindest ein Teil des permanentmagnetischen Flusses über den Reluktanzläufer, über den Luftspalt und einen elektromagnetischen Pol, insbesondere eines Zahns, des Stators schließt. Der Permanentmagnetfluss kann so über vergleichsweise kurze Wege über einen Zahn bzw. Polschenkel des elektromagnetischen Pols oder bei verteilten Wicklungen der Statorwicklung innerhalb einer Polteilung bzw. Spulenweite der Wicklung des elektromagnetischen Pols verlaufen, was einen kompakten magnetischen Kreis mit vergleichsweise geringen magnetischen Spannungsabfällen schaffen kann. Auf einfache konstruktive Weise kann so ein ausreichender permanentmagnetischer Fluss geschaffen werden, um damit für eine einfache Steuerung der magnetischen Lagerung sorgen zu können. Außerdem konnte festgestellt werden, dass im Zusammenwirken mit dem Reluktanzläufer es möglich werden kann, dass sich ein nicht mittelwertfreier, linear vom Statorstrom abhängiger Kräfteverlauf über den Läuferwinkel ausbildet, wenn die Statorwicklung konstant bestromt wird. Typische Einphasencharakteristika mit Momentenschwankungen und Anlaufschwierigkeiten können so auf konstruktiv einfache Weise vermieden werden, wobei bei hohen Drehzahlen sich außerdem ein einfaches Regelschema für eine magnetische Lagerung bzw. Tragkraftbildung an der elektrischen Maschine einstellen kann. Die Erfindung kann sich daher nicht nur dadurch auszeichnen, dass durch eine konstruktive Einfachheit eine in der Fokussierung verbesserte Tragkraftrichtung erzeugt, sondern auch ein neuer technischer Effekt zur Regelung der magnetischen Lagerung des Reluktanzläufers genützt werden kann, die Regelung zu vereinfachen. Die Erfindung kann sich daher vom Stand der Technik durch Robustheit, kostengünstigere Herstellbarkeit, sowie auch durch einfachere Steuerbarkeit des magnetisch gelagerten Reluktanzläufers absetzen.

Ist wenigstens ein Permanentmagnet im Bereich eines elektromagnetischen Pols angeordnet, dann kann eine kompakte Bauweise des Stators ermöglicht werden.

Einfache Montagemöglichkeiten hinsichtlich des Vorsehens des Permanentmagneten können sich ergeben, wenn wenigstens ein Zahn mindestens einen im Bereich des Luftspalts vorgesehenen Permanentmagneten trägt.

Um auf einfache Weise einer Erhöhung der Flussdichte zu erreichen, kann weiter vorgesehen sein, dass wenigstens zwei Permanentmagneten mit entgegengesetzter Polarität vorgesehenen sind.

Weist wenigstens ein Zahn des Stators wenigstens eine Ausnehmung mit einem mindestens teilweise aufgenommenen Permanentmagneten auf, dann kann unter anderem die Luftspalthöhe gering gehalten werden. Hohe Flussdichten können so für eine verbesserte Tragkraftausbildung unter anderem nutzbar werden. Für einen symmetrischen Aufbau, was unter anderem für eine Reduktion von Wirbelströmen genützt werden kann, kann der Permanentmagnet mittig eingebettet werden. Es ist aber auch vorstellbar, den Permanentmagneten einzugraben oder aus dem Stator vorragend in der Ausnehmung vorzusehen.

Der Reluktanzläufer kann als Außen- oder Innenläufer ausgeführt sein, um je nach mechanischer Anforderung zur Kraft- bzw. Drehmomentenabgabe verwendet werden zu können.

Um die Konstruktionsverhältnisse für eine kostengünstige elektrische Maschine noch weiter vereinfachen zu können, kann vorgesehen sein, dass am Stator mindestens eine Wicklung der Statorwicklung zur Erzeugung eines Steuerflusses für eine gemeinsame Drehmoment- und radiale Tragkraftbildung vorgesehen ist. Mit einer entsprechenden Steuerung kann nun über eine Wicklung die magnetische Lagerung des Reluktanzläufers, als auch seine Leistungsabgabe eingestellt werden. Die erfindungsgemäße elektrische Maschine kann daher gegenüber dem Stand der Technik für besonders kompakte Konstruktionsverhältnisse sorgen.

Die Steuerungsverhältnisse der elektrischen Maschine können vereinfacht werden, wenn die Statorwicklung für die Drehmoment- und für radiale Tragkraftbildung voneinander getrennt ansteuerbare Wicklungen aufweist.

Verlaufen im Reluktanzschnitt der Steuer- und Permanentmagnetfluss im Wesentlichen in einer gemeinsamen Ebene, vorzugsweise radialen Ebene, dann können damit die Konstruktionsverhältnisse noch weiter vereinfacht werden. Eine kostengünstige elektrische Maschine kann so geschaffen werden, insbesondere weil damit die Blechung bzw. das Blechpaket vergleichsweise einfach möglich ist. Außerdem können so Wirbelstromverluste reduziert werden. Dies kann vorzugsweise für die Konstruktion gelten, bei der bei getrennter Betrachtung der magnetischen Kreise sich zumindest bei einem Läuferwinkel ein wesentlicher Teil wenigstens eines magnetischen Flusses innerhalb einer permanentmagnetischen, gleiche Polarität aufweisenden Polausbildung über den Luftspalt und über den Reluktanzläufer zu einem magnetischen Kreis schließt.

Die erfindungsgemäße Konstruktion kann außerdem ermöglichen, dass der Reluktanzläufer permanentmagnetfrei ausgebildet ist. Damit kann unter anderem ein kostengünstiger Läufer geschaffen werden, der für diverse Anwendungen, die auswechselbare Läufer fordern, vorteilhaft eingesetzt werden kann. Eine kostengünstige elektrische Maschine kann daher auch für solche Zwecke zur Verfügung gestellt werden. Dies kann vorzugsweise für die Konstruktion gelten, bei der bei getrennter Betrachtung der magnetischen Kreise zumindest bei einem Läuferwinkel sich ein wesentlicher Teil wenigstens eines magnetischen Flusses innerhalb einer permanentmagnetischen, gleiche Polarität aufweisenden Polausbildung über den Luftspalt und über den Reluktanzläufer zu einem magnetischen Kreis schließt.

Weist der Stator und/oder der Reluktanzläufer mindestens in einem Teilbereich eine an den Luftspalt angrenzende Verzahnung auf, dann kann die elektrische Maschine auch ähnlich einem Schrittmotor verwendet werden.

Unterschiedliche Polausbildungen im Stator können dadurch ermöglicht werden, dass mindestens eine elektromagnetische Polausbildung mindestens eine zumindest teilweise verteilte Wicklung aufweist.

### Kurze Beschreibung der Zeichnung

In den Figuren ist beispielsweise der Erfindungsgegenstand anhand von Ausführungsbeispielen dargestellt. Es zeigen
- Fig. 1: eine Ansicht zu einem Reluktanzschnitt einer elektrischen Maschine mit einem sich hauptsächlich innerhalb einer permanentmagnetischen Polausbildung mit gleicher Polarität schließenden elektromagnetischen Kreis,
- Fig. 2: eine Ansicht zu einem Reluktanzschnitt einer elektrischen Maschine nach einem weiteren Ausführungsbeispiel mit einem sich hauptsächlich innerhalb eines zusammenhängenden ferromagnetischen und wicklungsfreien Sektors schließenden permanentmagnetischen Kreis,
- Fig. 3: eine Ansicht zu einem Reluktanzschnitt einer elektrischen Maschine nach einem dritten Ausführungsbeispiel mit einem sich hauptsächlich innerhalb einer elektromagnetischen Polausbildung mit gleicher Polarität schließenden permanentmagnetischen Kreis,
- Fig. 4: eine Detailansicht zur Fig. 3,
- Fig. 5: eine veränderte Konstruktionsausführung zu Fig. 3 einer elektrischen Maschine nach einem vierten Ausführungsbeispiel,
- Fig. 6: eine Detailansicht zur Fig. 5,
- Fig. 7: eine nach Fig. 3 dargestellte elektrische Maschine mit einem Außenläufer als fünftes Ausführungsbeispiel und
- Fig. 8: eine Darstellung von Tragkraftorbitalen,
- Figur 9a, 9b, 9c: Ansichten zu am Stator unterschiedlich vorgesehenen Permanentmagneten,
- Fig. 10: eine abgewickelte Ansicht auf eine Polausbildung mit verteilten Wicklungen,
- Figur 11 und 12: Ansichten auf unterschiedliche Wicklungen zur Polausbildung,
- Fig. 13: eine alternative Ausführung einer Bewicklung zur getrennten Tragkraft- und Drehmomentenbildung,
- Fig. 14: eine alternative Ausführungsform zur elektrischen Maschine nach Fig. 2 und
- Fig. 15: eine Ansicht auf eine elektrische Maschine mit einer Verzahnung nach einer weiteren Ausführungsform.

### Weg zur Ausführung der Erfindung

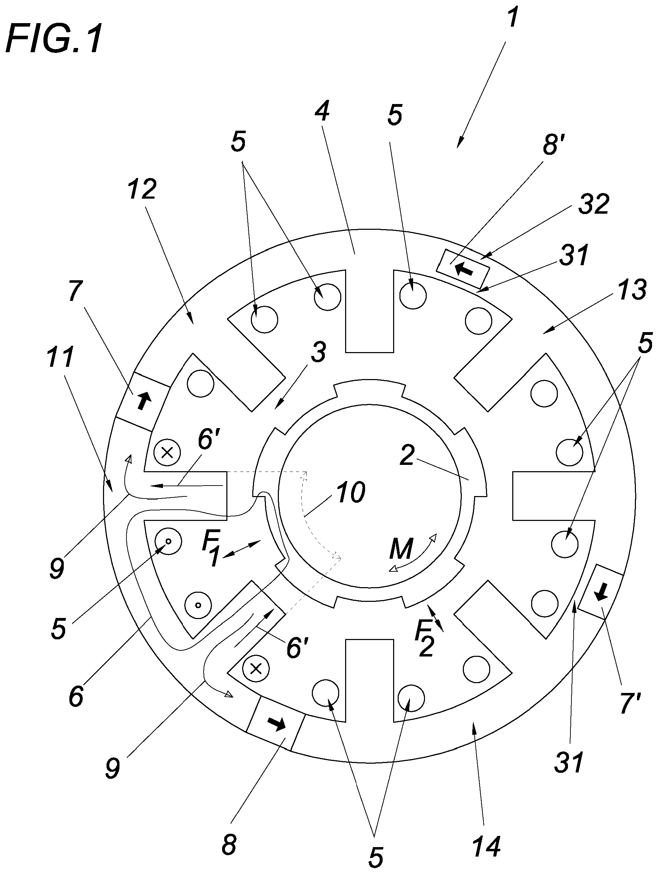

Die gemäß Fig. 1 im Reluktanzschnitt dargestellte elektrische Maschine 1 nach einem ersten Ausführungsbeispiel weist einen Reluktanzläufer 2 und einen vom Reluktanzläufer 2 durch einen Luftspalt 3 getrennten Stator 4 auf. Der Reluktanzläufer 2 bzw. Reluktanzrotor ist gegenüber dem Stator 4 radial magnetisch gelagert. Zu Zwecken der Lagerung und der Drehmomentenbildung weist der Stator 4 eine elektrische Statorwicklung 5 zur Erzeugung eines elektromagnetischen Steuerflusses 6' und Permanentmagneten 7, 8, 7' und 8' zur Erzeugung eines Permanentmagnetflusses 9' auf. Der Permanentmagnetfluss 9' bilden sich hier heteropolar um den Statorumfang aus. Steuerfluss 6' und Permanentmagnetfluss 9' überlagern sich rotorwinkelabhängig zur Erzeugung von Drehmoment- und/oder radialen Tragkraftbildung M, F1, F2 zumindest in Teilbereichen des Luftspalts 3. Um mit gegenüber dem Stand der Technik vereinfachten Konstruktionsverhältnissen erhöhte magnetische Flussdichten zu erreichen, sieht die Erfindung vor, dass sich bei getrennter Betrachtung der magnetischen Kreise ein magnetischer bzw. der elektromagnetischer Kreis 6 innerhalb einer permanentmagnetischen Polausbildung 10 mit gleicher Polarität (N), über den Reluktanzläufer 2 und über den Luftspalt 3 schließt. Die Permanentmagneten 7, 8, 7', 8' segmentieren somit den Stator 2 in Statorsegmente 11, 12, 13 und 14 und zwingen den elektromagnetische Kreis 6 in eine enge Erstreckung, so dass gegenüber dem Stand der Technik eine vergleichsweise hoch fokussierte Tragkraft (F1 bzw. F2) pro Segment 11, 12, 13 und 14 ermöglicht werden kann. Die angrenzenden Statorsegmente 11, 12, 13 und 14 können beispielsweise über Sättigungsstege 31, 32 mechanisch miteinander verbunden sein. In Fig. 1 wurden zwei Konstruktionen von Sättigungsstegen dargestellt. So findet sich lediglich ein Sättigungssteg 31 beim Permanentmagneten 7', wohingegen zwei Sättigungsstege 31 und 32 beim Permanentmagneten 8' dargestellt worden sind.

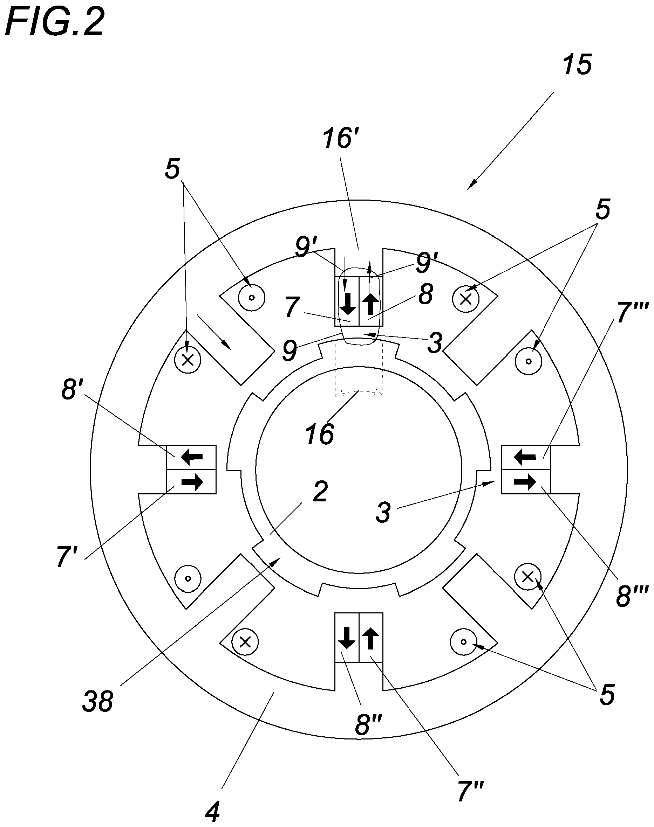

Nach Fig. 2 wird eine weitere Ausführungsform der elektrischen Maschinen 15 beispielsweise dargestellt. Hier schließt sich der magnetische bzw. permanentmagnetische Kreis 6 innerhalb eines zusammenhängenden ferromagnetischen und wicklungsfreien Sektors 16 über den Reluktanzläufer 2 und über den Luftspalt 3. Auch hier kann über vereinfachte Konstruktionsverhältnisse eine erhöhte magnetische Flussdichte im Luftspalt 3 gewährleistet werden.

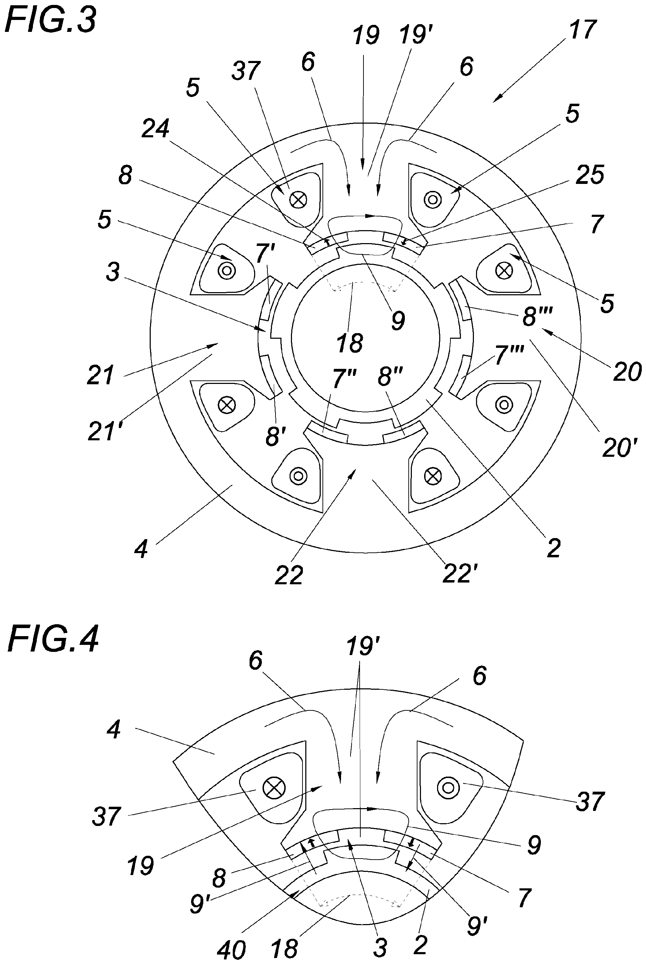

Gemäß Fig. 3 wird ein weiteres Ausführungsbeispiel einer elektrischen Maschine 17 gezeigt. Hier sieht die Erfindung vor, dass der magnetische bzw. permanentmagnetische Kreis 9 innerhalb einer elektromagnetischen Polausbildung 18 mit gleicher Polarität (N) über den Reluktanzläufer 2 und über den Luftspalt 3 schließt. In diesem Fall besteht die Polausbildung 18 aus einem Pol 19, der von einem Zahn 20 des Stators 4 ausgebildet wird. Wie in der Fig. 3 erkannt werden kann, weist der Stator 4 Pole 19, 20, 21 und 22 auf, die je von Zähnen 19', 20', 21' und 22' gebildet werden. Es ist aber auch vorstellbar, dass auf einen Zahn 19', 20', 21' und/oder 22' verzichtet und lediglich die Wicklung 37 der Statorwicklung 5 als Luftspule (oder in Form von verteilten nutenlosen Wicklungsanordnungen, was nicht dargestellt worden ist, den Pol 19 ausbildet.

Im Allgemeinen wird erwähnt, dass die in den Figuren dargestellte Bestromung der Statorwicklung 5 beispielsweise zu verstehen ist. Andere Formen der Statorwicklung 5 sowie deren elektrische Ansteuerung bzw. Bestromung ist vorstellbar, nicht jedoch eingezeichnet.

Wie der Fig. 3 weiter entnommen werden kann, sind die Permanentmagneten 7, 8 und 7', 8' und 7", 8" und 7'", 8'" im Bereich der elektromagnetischen Pole 19, 20, 21 und 22 angeordnet. Diese sind an den jeweiligen Zahn 19', 20', 21' bzw. 22' befestigt und ragen in den Luftspalt 3 zwischen Stator 4 und Reluktanzläufer 2. Zur verbesserten Symmetrie sind je zwei Permanentmagnete 7, 8 und 7', 8' und 7", 8" bzw. 7'", 8'" an einem Zahn 19', 20', 21' bzw. 22' vorgesehen, wobei diese Permanentmagnete 7, 8 und 7', 8' und 7", 8" bzw. 7'", 8'" entgegengesetzte Polarität 23, 24 aufweisen, wie dies an den eingezeichneten Pfeilen der Magnete 7, 8 beispielsweise ersichtlich ist.

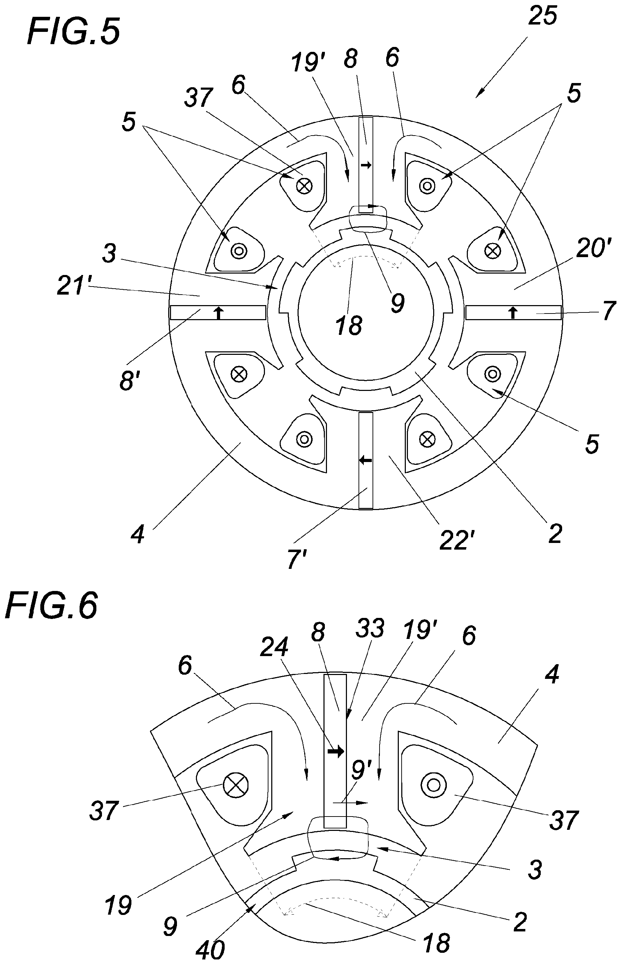

Gemäß Fig. 5 wird ein weiteres Ausführungsbeispiel zu einer elektrischen Maschine 25 gezeigt. Zum Unterschied zu der nach Fig. 3 dargestellten elektrischen Maschine 17 zeigt diese Maschine 25 im Zahn 19', 20', 21' bzw. 22' eingebettete Permanentmagnete 7, 8 und 7', 8'. Diese Konstruktion erlaubt es, einen vergleichsweise kleinen Luftspalt 3 zwischen Stator 4 und Reluktanzläufer 2 vorsehen zu können. Eine erhöhte Tragkrafterzeugung ist dadurch beispielsweise möglich.

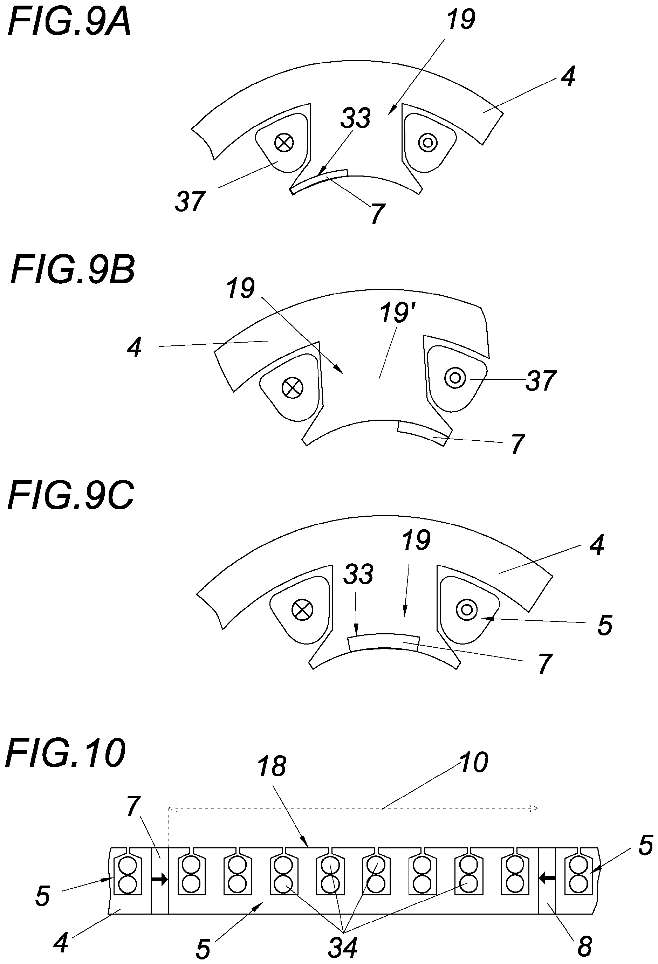

Weitere Ausführungsformen zur Montage von Permanentmagneten 7 sind nach den Figuren 9A, 9B und 9C dargestellt. In den Figuren 9A und 9C ist ein Permanentmagnet 7 eingegraben dargestellt, und zwar wird dieser 7 in eine Ausnehmung 33 des Stators 4 eingesetzt und mit dem Stator 4 fest verbunden. In der Fig. 9B ist im Gegensatz zu Fig. 3 lediglich ein Permanentmagnet 7 am Polschuh des Zahns 19' vorgesehen.

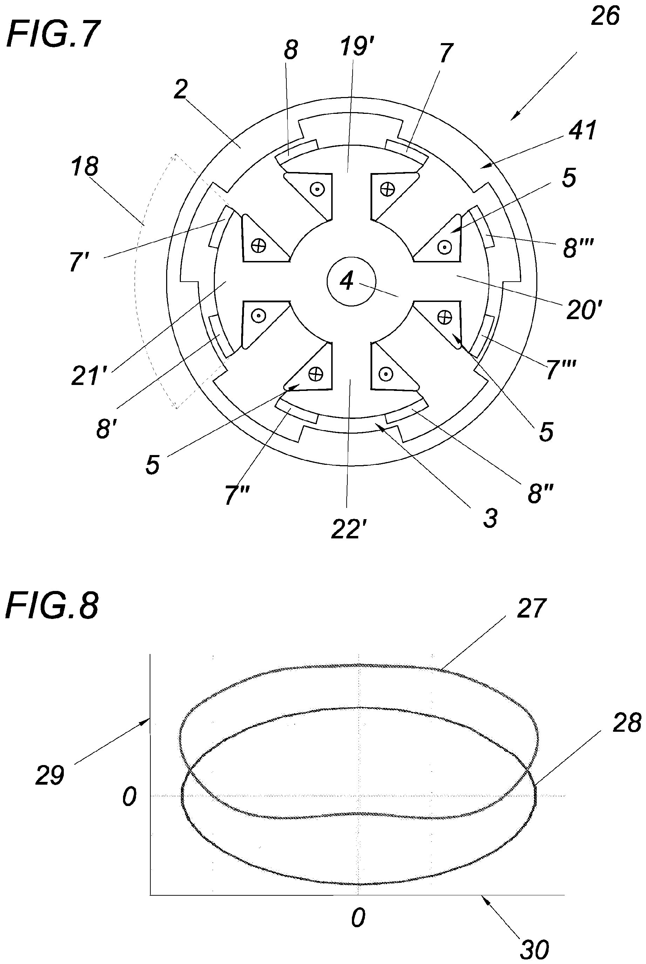

Gemäß den Figuren 1 bis 4 sind elektrische Maschinen 1, 15, 17 und 25 mit einem Reluktanzläufer 2 als Innenläufer 40 zu erkennen. Es ist aber durchaus im Rahmen der Erfindung, den Reluktanzläufer 2 als Außenläufer 41 vorzusehen, wie dies beispielsweise gemäß der elektrischen Maschine 26 nach Fig. 7 dargestellt worden ist.

Insbesondere konnte jedoch für die elektrischen Maschinen 17, 25 und 26 nach den Figuren 3, 5 und 7 festgestellt werden, dass bei einer konstanten Bestromung ein nicht mittelwertfreier, linear vom Statorstrom abhängiger Kräfteverlauf über den Rotorwinkel erreicht werden kann, wenn sich zumindest ein Teil des permanentmagnetischen Flusskreises 9 über den Reluktanzläufer 2, über den Luftspalt 3 und einen elektromagnetischen Pol 19, 20, 21, 22 schließt. Dies ist in der Fig. 8 dargestellt. Hier kann das neuartige Orbital 27 gegenüber dem bekannten Orbital 28 erkannt werden. Das erfindungsgemäße Orbital 27 ist, wie deutlich zu erkennen, über den Tangentialkraftverlauf 29 verschoben. Hinsichtlich des Radialkraftverlaufs 30 kann keine wesentliche Änderung erkannt werden.

Diese spezielle Eigenschaft in der Tragkraftbildung ist besonders bei lagerlosen Motoren mit geringer Strangzahl, Wicklungsanzahl bzw. Spulenanzahl von Vorteil. Die minimale Wicklungsanzahl bei lagerlosen Motoren beträgt drei Spulen - bei Stern- oder Dreieckschaltung vier Stränge, Spulen bzw. Wicklungen. Solche Konstruktionen sind mechanisch sehr einfach und kostengünstig herzustellen. Mit dem herkömmlichen Kraftorbital weisen solche Motoren eine so genannte Ein-Phasencharakteristik auf, d. h. es gibt Rotorwinkelstellungen, in denen kein Drehmoment erzeugt werden kann. Dies führt zu Drehmomentenschwankungen im Betrieb bzw. gegebenenfalls auch zu Anlaufschwierigkeiten. Mit dem erfindungsgemäßen Tragkraftorbital tritt die beschriebene Ein-Phasencharakteristik (bei lagerlosen Motoren mit vier in Stern verschalteten Wicklungen am Stator bzw. an Statorspulen) nicht mehr auf. Es lässt sich also in jeder Winkelstellung neben Tragkräften also auch ein Drehmoment erzeugen.

Ein weiterer Vorteil, der sich ergibt, liegt im Verfahren zur Ansteuerung der elektrischen Maschine und ist für alle lagerlosen Reluktanzläufer (unabhängig von der Spulenzahl) mit verschobenem Tragkraftorbit gültig. Normalerweise benötigt man für die Tragkraftregelung den Läufer- bzw. Rotorwinkel. Unter bestimmten Umständen (z.B. bei schneller Rotordrehzahl und/oder hoher Dämpfung von Rotorschwingungen) kann erfindungsgemäß nun auf eine Bestimmung des Rotorwinkels verzichtet werden, da erstmals eine konstante Bestromung über eine Rotordrehung auch eine mittlere linear vom Statorstrom abhängige resultierende Tragkraft bildet. Aus diesem Grund kann erstmals das von Magnetlagern bekannte Verfahren zur Regelung auch bei lagerlosen Motoren zum Einsatz kommen.

Des Weiteren sind auch verteilte Wicklungen 34 einer Statorwicklung 5 zur elektromagnetischen Polausbildung 19 vorstellbar, wie dies beispielsweise in einer zweilagigen Spulenanordnung nach Fig. 10 erkannt werden kann. Hier findet die elektromagnetische Polausbildung 19 innerhalb der permanentmagnetischen Polausbildung 10 statt. Zu Fig. 10 wird noch erwähnt, dass die Verschaltung der Spulen der verteilten Wicklung 34 der Einfachheit halber nicht dargestellt worden ist.

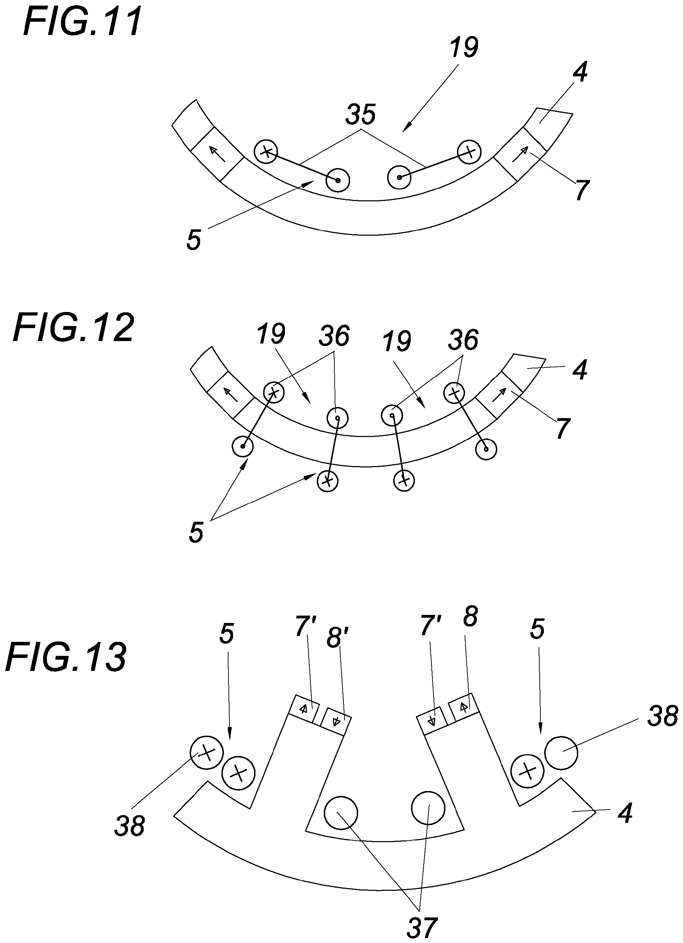

Nach den Figuren 11 und 12 sind beispielsweise nutenlose Statorausführungen dargestellt. Gemäß Fig. 11 wird eine Polausbildung 19 mit einer Wicklung 35 aus Luftspulen dargestellt. Nach Fig. 12 wird eine Wicklung 35 aus Toriodspulen beispielsweise dargestellt, welche auch zur Bildung einer Polausbildung 19 dienen. Im nutenlosen Fall sind auch verteilte Wicklungen vorstellbar.

In der Fig. 13 wird außerdem beispielsweise darauf hingewiesen, dass alleinig für die Tragkraftbildung eine Wicklung 37 (insbesondere Zahnspulenwicklung) und alleinig für die Drehmomentenbildung eine getrennte Wicklung 38 (insbesondere verteilte Wicklung) vorgesehen werden kann. Die beiden Wicklungen 37 und 38 weisen im Allgemeinen eine unterschiedliche Polpaarzahl auf.

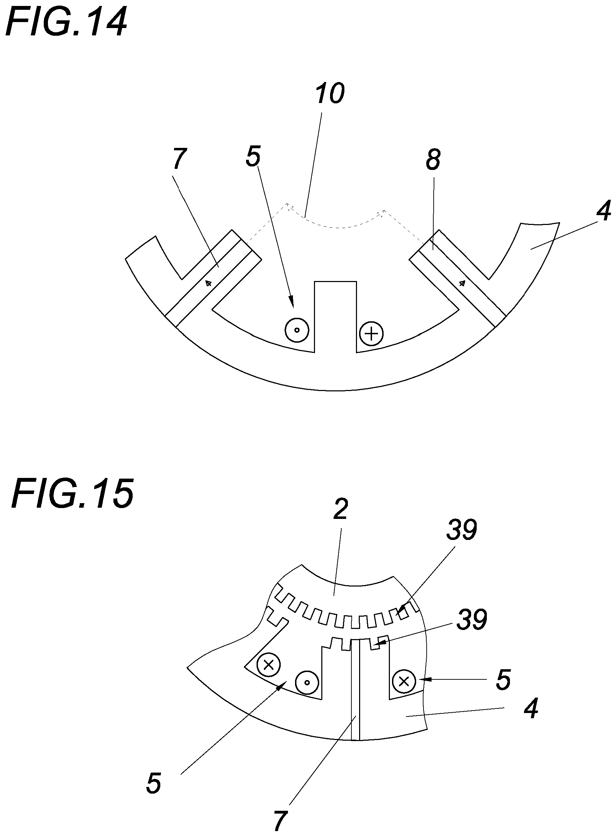

Eine zur Ausführungsform der Fig. 2 ähnliche Ausführungsform ist gemäß Fig. 14 dargestellt. Auch hier kann eine permanentmagnetische Polausbildung 16, eingeprägt durch Permanentmagnete 7 und 8, erkannt werden.

Eine Verzahnung 39 wird nach Fig. 15 dargestellt, welche am Reluktanzläufer 2 und/oder am Stator 4 vorgesehen sein kann, um so Eigenschaften eines Schrittmotors zu ermöglichen.

Im Allgemeinen wird noch erwähnt, dass die Polarität der Permanentmagneten in den Figuren beispielsweise dargestellt worden ist - unterschiedliche Ausprägungen sind vorstellbar.

## Patentansprüche

1. Elektrische Maschine mit einem Pole (19, 20, 21, 22) ausbildenden Stator (4), der wenigstens eine elektrische Statorwicklung (5) zur Erzeugung eines elektromagnetischen Steuerflusses (6') und mindestens einen Permanentmagneten (7, 7', 7", 7'", 8, 8', 8", 8"') zur Erzeugung eines permanentmagnetischen Flusses (9') aufweist, und mit einem gegenüber dem Stator (4) radial magnetisch gelagerten Reluktanzläufer (2), wobei die elektrische Maschine (1, 15, 17, 25, 26) elektromagnetische und permanentmagnetische Kreise (6, 9) aufweist, die sich läuferwinkelabhängig zur Drehmoment- (M) und zur radialen Tragkraftbildung (F1, F2) für die magnetische Lagerung des Reluktanzläufers (2) zumindest in Teilbereichen des Luftspalts (3) überlagern, **dadurch gekennzeichnet, dass** sich bei getrennter Betrachtung der magnetischen Kreise (6, 9) zumindest bei einem Läuferwinkel ein wesentlicher Teil
des elektromagnetischen Steuerflusses (6') innerhalb einer permanentmagnetischen, gleiche Polarität aufweisenden Polausbildung (10) an einem Statorsegment (11, 12, 13 und 14) des Stators (4), wobei die Permanentmagnete (7, 8, 7', 8') den Stator (4) in Statorsegmente (11, 12, 13 und 14) magnetisch segmentieren und die an ein jeweiliges Statorsegment (11, 12, 13 und 14) angrenzenden Permanentmagnete (7, 8, 7', 8') zu diesem Statorsegment (11, 12, 13 und 14) mit gleichnamiger Polarität angeordnet sind, um den Permanentmagnetfluss (9) in diesem Statorsegment (11, 12, 13 und 14) zu erzeugen, über den Luftspalt (3) und über den Reluktanzläufer (2) zu einem elektromagnetischen Kreis (6) schließt.

2. Elektrische Maschine mit einem Pole (19, 20, 21, 22) ausbildenden Stator (4), der wenigstens eine elektrische Statorwicklung (5) zur Erzeugung eines elektromagnetischen Steuerflusses (6') und mindestens einen Permanentmagneten (7, 7', 7", 7'", 8, 8', 8", 8"') zur Erzeugung eines permanentmagnetischen Flusses (9') aufweist, und mit einem gegenüber dem Stator (4) radial magnetisch gelagerten Reluktanzläufer (2), wobei die elektrische Maschine (1, 15, 17, 25, 26) elektromagnetische und permanentmagnetische Kreise (6, 9) aufweist, die sich läuferwinkelabhängig zur Drehmoment- (M) und zur radialen Tragkraftbildung (F1, F2) für die magnetische Lagerung des Reluktanzläufers (2) zumindest in Teilbereichen des Luftspalts (3) überlagern, **dadurch gekennzeichnet, dass** sich bei getrennter Betrachtung der magnetischen Kreise (6, 9) zumindest bei einem Läuferwinkel ein wesentlicher Teil
des permanentmagnetischen Flusses (9') innerhalb einer elektromagnetischen, gleiche Polarität aufweisenden Polausbildung (18) über den Luftspalt (3) und über den Reluktanzläufer (2) zu einem permanentmagnetischen Kreis (9) schließt.

3. Elektrische Maschine mit einem Pole (19, 20, 21, 22) ausbildenden Stator (4), der wenigstens eine elektrische Statorwicklung (5) zur Erzeugung eines elektromagnetischen Steuerflusses (6') und mindestens einen Permanentmagneten (7, 7', 7", 7"', 8, 8', 8", 8"') zur Erzeugung eines permanentmagnetischen Flusses (9') aufweist, und mit einem gegenüber dem Stator (4) radial magnetisch gelagerten Reluktanzläufer (2), wobei die elektrische Maschine (1, 15, 17, 25, 26) elektromagnetische und permanentmagnetische Kreise (6, 9) aufweist, die sich läuferwinkelabhängig zur Drehmoment- (M) und zur radialen Tragkraftbildung (F1, F2) für die magnetische Lagerung des Reluktanzläufers (2) zumindest in Teilbereichen des Luftspalts (3) überlagern, **dadurch gekennzeichnet, dass** sich bei getrennter Betrachtung der magnetischen Kreise (6, 9) zumindest bei einem Läuferwinkel ein wesentlicher Teil
des permanentmagnetischen Flusses (9') innerhalb eines zusammenhängenden und wicklungsfreien, insbesondere ferromagnetischen, Statorsektors (16), der, mit entgegengesetzter Polarität angeordnete Permanentmagneten (7, 8 bzw. 7', 8' bzw. 7", 8" bzw. 7"', 8"') aufweist, um den permanentmagnetischen Fluss (9') zu erzeugen, über den Luftspalt (3) und über den Reluktanzläufer (2) zu einem permanentmagnetischen Kreis (9) schließt.

4. Elektrische Maschine nach Anspruch 1, **dadurch gekennzeichnet, dass** wenigstens ein Permanentmagnet (7, 7', 8, 8') zwischen zwei angrenzenden ferromagnetischen Statorsegmenten (11, 12, 13, 14) wenigstens teilweise zur Ausbildung einer zumindest teilweisen Flussbarriere für die elektromagnetischen Steuerflüsse (6') vorgesehen ist.

5. Elektrische Maschine nach Anspruch 4, **dadurch gekennzeichnet, dass** angrenzende Statorsegmente (11, 12, 13, 14) über mindestens einen Sättigungssteg (31, 32) mechanisch miteinander verbunden sind.

6. Elektrische Maschine nach Anspruch 3, **dadurch gekennzeichnet, dass** sich zumindest ein Teil des permanentmagnetischen Flusses (9') über den Reluktanzläufer (2), über den Luftspalt (3) und über einen wicklungsfreien ferromagnetischen Zahn (16') des Stators (4) schließt.

7. Elektrische Maschine nach Anspruch 2, **dadurch gekennzeichnet, dass** sich zumindest ein Teil des permanentmagnetischen Flusses (9') über den Reluktanzläufer (2), über den Luftspalt (3) und über einen elektromagnetischen Pol (19, 20, 21, 22), insbesondere über mindestens einen Zahn (19', 20', 21', 22'), des Stators (4) schließt.

8. Elektrische Maschine nach Anspruch 2, 3, 6 oder 7, **dadurch gekennzeichnet, dass** wenigstens ein Permanentmagnet (7, 7', 7", 7'", 8, 8', 8", 8'") im Bereich eines elektromagnetischen Pols (19, 20, 21, 22) angeordnet ist.

9. Elektrische Maschine nach Anspruch 2, 3, 6, 7 oder 8, **dadurch gekennzeichnet, dass** wenigstens ein Zahn (19', 20', 21', 22') mindestens einen im Bereich des Luftspalts (3) vorgesehenen Permanentmagneten (7, 7', 7", 7'", 8, 8', 8", 8'") trägt.

10. Elektrische Maschine nach Anspruch 9, **dadurch gekennzeichnet, dass** wenigstens zwei Permanentmagneten (7, 7', 7", 7'", 8, 8', 8", 8'") mit entgegengesetzter Polarität (24, 25) vorgesehenen sind.

11. Elektrische Maschine nach Anspruch 2, 3, 6, 7 oder 8, **dadurch gekennzeichnet, dass** wenigstens ein Zahn (19', 20', 21', 22') des Stators (4) wenigstens eine Ausnehmung (33) mit einem mindestens teilweise aufgenommenen Permanentmagneten (7, 7', 8, 8') aufweist.

12. Elektrische Maschine nach einem der Ansprüche 1 bis 11, **dadurch gekennzeichnet, dass** mindestens eine Wicklung (37) der Statorwicklung (5) einen Steuerfluss (6) für eine gemeinsame Drehmoment- und radiale Tragkraftbildung (M, F₁, F₂) erzeugt.

13. Elektrische Maschine nach einem der Ansprüche 1 bis 11, **dadurch gekennzeichnet, dass** die Statorwicklung (5) für die Drehmoment- und für radiale Tragkraftbildung (M, F1, F2) voneinander getrennt ansteuerbare Wicklungen (37, 38) aufweist.

14. Elektrische Maschine nach einem der Ansprüche 1 bis 13, **dadurch gekennzeichnet, dass** im Reluktanzschnitt der Steuer- und Permanentmagnetfluss (6', 9') im Wesentlichen in einer gemeinsamen Ebene, vorzugsweise radialen Ebene, verlaufen.

15. Elektrische Maschine nach einem der Ansprüche 1 bis 14, **dadurch gekennzeichnet, dass** der Stator (4) und/oder der Reluktanzläufer (2) mindestens in einem Teilbereich eine an den Luftspalt (3) angrenzende Verzahnung (39) aufweisen.

## Claims

1. Electric machine having a stator (4) which forms poles (19, 20, 21, 22) and has at least one electric stator winding (5) for generating an electromagnetic control flux (6') and at least one permanent magnet (7, 7', 7", 7"', 8, 8', 8", 8"') for generating a permanent magnetic flux (9'), and having a reluctance rotor (2) which is mounted radially magnetically with respect to the stator (4), the electric machine (1, 15, 17, 25, 26) having electromagnetic and permanent-magnetic circuits (6, 9) which are superimposed in dependence on the rotor angle for the formation of torque (M) and for the formation of radial load-bearing force (F1, F2) for the magnetic mounting of the reluctance rotor (2) at least in subregions of the air gap (3), **characterised in that**, when the magnetic circuits (6, 9) are viewed separately, at least at a rotor angle a substantial part
of the electromagnetic control flux (6') is located within a permanent-magnetic pole formation (10) having the same polarity on a stator segment (11, 12, 13 and 14) of the stator (4), the permanent magnets (7, 8, 7', 8') magnetically segmenting the stator (4) into stator segments (11, 12, 13 and 14) and the permanent magnets (7, 8, 7', 8') adjacent to a respective stator segment (11, 12, 13 and 14) are arranged with the same polarity to this stator segment (11, 12, 13 and 14), to generate the permanent magnet flux (9) in this stator segment (11, 12, 13 and 14), closes via the air gap (3) and via the reluctance rotor (2) to form an electromagnetic circuit (6).

2. Electric machine having a stator (4) which forms poles (19, 20, 21, 22) and has at least one electric stator winding (5) for generating an electromagnetic control flux (6') and at least one permanent magnet (7, 7', 7", 7"', 8, 8', 8", 8"') for generating a permanent magnetic flux (9'), and having a reluctance rotor (2) which is mounted radially magnetically with respect to the stator (4), the electric machine (1, 15, 17, 25, 26) having electromagnetic and permanent-magnetic circuits (6, 9) which are superimposed in dependence on the rotor angle for the formation of torque (M) and for the formation of radial load-bearing force (F1, F2) for the magnetic mounting of the reluctance rotor (2) at least in subregions of the air gap (3), **characterised in that**, when the magnetic circuits (6, 9) are viewed separately, at least at a rotor angle a substantial part
of the permanent-magnetic flux (9') closes within an electromagnetic pole formation (18) having the same polarity via the air gap (3) and via the reluctance rotor (2) to form a permanent-magnetic circuit (9).

3. Electric machine having a stator (4) which forms poles (19, 20, 21, 22) and has at least one electric stator winding (5) for generating an electromagnetic control flux (6') and at least one permanent magnet (7, 7', 7", 7"', 8, 8', 8", 8"') for generating a permanent magnetic flux (9'), and having a reluctance rotor (2) which is mounted radially magnetically with respect to the stator (4), the electric machine (1, 15, 17, 25, 26) having electromagnetic and permanent-magnetic circuits (6, 9) which are superimposed in dependence on the rotor angle for the formation of torque (M) and for the formation of radial load-bearing force (F1, F2) for the magnetic mounting of the reluctance rotor (2) at least in subregions of the air gap (3), **characterised in that**, when the magnetic circuits (6, 9) are viewed separately, at least at a rotor angle a substantial part
of the permanent-magnetic flux (9') within an interrelated and winding-free, more particularly ferromagnetic, stator sector (16) which, arranged with opposite polarity, contains permanent magnets (7, 8 or 7', 8' or 7", 8" or 7"', 8"') arranged with opposite polarity to generate the permanent magnetic flux (9'), closes via the air gap (3) and via the reluctance rotor (2) to form a permanent magnetic circuit (9).

4. Electric machine according to claim 1, **characterized in that** at least one permanent magnet (7, 7', 8, 8') is provided between two adjacent ferromagnetic stator segments (11, 12, 13, 14) at least partially for forming an at least partial flux barrier for the electromagnetic control fluxes (6').

5. Electric machine according to claim 4, **characterized in that** adjacent stator segments (11, 12, 13, 14) are mechanically interconnected via at least one saturation bar (31, 32).

6. Electric machine according to claim 3, **characterized in that** at least part of the permanent magnetic flux (9') closes via the reluctance rotor (2), via the air gap (3) and via a winding-free ferromagnetic tooth (16') of the stator (4).

7. Electric machine according to claim 2, **characterized in that** at least a part of the permanent magnetic flux (9') closes via the reluctance rotor (2), via the air gap (3) and via an electromagnetic pole (19, 20, 21, 22), more particularly via at least one tooth (19', 20', 21', 22'), of the stator (4).

8. Electric machine according to claim 2, 3, 6 or 7, **characterized in that** at least one permanent magnet (7, 7', 7", 7"', 8, 8', 8", 8"') is arranged in the region of an electromagnetic pole (19, 20, 21, 22).

9. Electric machine according to claim 2, 3, 6, 7 or 8, **characterized in that** at least one tooth (19', 20', 21', 22') carries at least one permanent magnet (7, 7', 7", 7'", 8, 8', 8", 8'") provided in the region of the air gap (3).

10. Electric machine according to claim 9, **characterized in that** at least two permanent magnets (7, 7', 7", 7"', 8, 8', 8", 8'") with opposite polarity (24, 25) are provided.

11. Electric machine according to claim 2, 3, 6, 7 or 8, **characterized in that** at least one tooth (19', 20', 21', 22') of the stator (4) has at least one recess (33) with a permanent magnet (7, 7', 8, 8') at least partially housed therein.

12. Electric machine according to any one of claims 1 to 11, **characterized in that** at least one winding (37) of the stator winding (5) generates a control flux (6) for a common torque and radial carrying force formation (M, F1, F2).

13. Electric machine according to one of the claims 1 to 11, **characterized in that** the stator winding (5) has windings (37, 38) which can be driven separately from one another for torque formation and for radial load formation (M, F1, F2).

14. Electric machine according to one of claims 1 to 13, **characterized in that** in the reluctance section the control and permanent magnet fluxes (6', 9') run essentially in a common plane, preferably radial plane.

15. Electric machine according to one of the claims 1 to 14, **characterized in that** the stator (4) and/or the reluctance rotor (2) have, at least in a partial region, a toothing (39) adjacent to the air gap (3).

## Revendications

1. Machine électrique comportant un stator (4) formant des pôles (19, 20, 21, 22), qui présente au moins un enroulement statorique électrique (5) pour générer un flux de commande électromagnétique (6') et au moins un aimant permanent (7, 7', 7", 7"', 8, 8', 8", 8"') pour la génération d'un flux magnétique permanent (9'), et avec un rotor à réluctance (2) qui est monté de manière radialement magnétique par rapport au stator (4), la machine électrique (1, 15, 17, 25, 26) présentant des circuits électromagnétiques et à aimantation permanente (6, 9) qui se superposent en fonction de l'angle du rotor pour la formation du couple (M) et pour la formation de la force portante radiale (F1, F2) pour le montage magnétique du rotor à réluctance (2) au moins dans des zones partielles de l'entrefer (3), **caractérisé en ce que**, lorsque les circuits magnétiques (6, 9), au moins à un angle du rotor, une partie substantielle
du flux de commande électromagnétique (6') à l'intérieur d'une formation de pôles à aimants permanents (10) ayant la même polarité est située sur un segment de stator (11, 12, 13 et 14) du stator (4), les aimants permanents (7, 8, 7', 8') segmentant magnétiquement le stator (4) en segments de stator (11, 12, 13 et 14) et les aimants permanents (7, 8, 7', 8') adjacents à un segment de stator respectif (11, 12, 13 et 14) sont disposés avec la même polarité que ce segment de stator (11, 12, 13 et 14) pour générer le flux d'aimant permanent (9) dans ce segment de stator (11, 12, 13 et 14), se ferme via l'entrefer (3) et via le rotor à réluctance (2) à un circuit électromagnétique (6).

2. Machine électrique comportant un stator (4) formant des pôles (19, 20, 21, 22), qui présente au moins un enroulement statorique électrique (5) pour générer un flux de commande électromagnétique (6') et au moins un aimant permanent (7, 7', 7", 7"', 8, 8', 8", 8'") pour la génération d'un flux magnétique permanent (9'), et avec un rotor à réluctance (2) qui est monté de manière radialement magnétique par rapport au stator (4), la machine électrique (1, 15, 17, 25, 26) présentant des circuits électromagnétiques et à aimantation permanente (6, 9) qui se superposent en fonction de l'angle du rotor pour la formation du couple (M) et pour la formation de la force portante radiale (F1, F2) pour le montage magnétique du rotor à réluctance (2) au moins dans des zones partielles de l'entrefer (3), **caractérisé en ce que**, lorsque les circuits magnétiques (6, 9), au moins à un angle du rotor, une partie substantielle
du flux magnétique permanent (9') se ferme à l'intérieur d'une formation de pôles électromagnétiques (18) ayant la même polarité via l'entrefer (3) et via le rotor à réluctance (2) pour former un circuit magnétique permanent (9).

3. Machine électrique comportant un stator (4) formant des pôles (19, 20, 21, 22), qui présente au moins un enroulement statorique électrique (5) pour générer un flux de commande électromagnétique (6') et au moins un aimant permanent (7, 7', 7", 7"', 8, 8', 8", 8'") pour la génération d'un flux magnétique permanent (9'), et avec un rotor à réluctance (2) qui est monté de manière radialement magnétique par rapport au stator (4), la machine électrique (1, 15, 17, 25, 26) présentant des circuits électromagnétiques et à aimantation permanente (6, 9) qui se superposent en fonction de l'angle du rotor pour la formation du couple (M) et pour la formation de la force portante radiale (F1, F2) pour le montage magnétique du rotor à réluctance (2) au moins dans des zones partielles de l'entrefer (3), **caractérisé en ce que**, lorsque les circuits magnétiques (6, 9), au moins à un angle du rotor, une partie substantielle
du flux magnétique permanent (9') se produit à l'intérieur d'un secteur de stator (16) cohérent et sans enroulement, en particulier ferromagnétique, qui, disposé avec une polarité opposée, contient des aimants permanents (7, 8 ou 7', 8' ou 7", 8" ou 7"', 8"') disposés avec une polarité opposée pour générer le flux magnétique permanent (9'), se ferme via l'entrefer (3) et via le rotor à réluctance (2) pour former un circuit magnétique permanent (9).

4. Machine électrique selon la revendication 1, **caractérisée en ce qu'**au moins un aimant permanent (7, 7', 8, 8') est prévu entre deux segments de stator ferromagnétiques adjacents (11, 12, 13, 14) au moins partiellement pour former une barrière de flux au moins partielle pour les flux de commande électromagnétiques (6').

5. Machine électrique selon la revendication 4, **caractérisée en ce que** des segments de stator adjacents (11, 12, 13, 14) sont reliés mécaniquement les uns aux autres par au moins une barre de saturation (31, 32).

6. Machine électrique selon la revendication 3, **caractérisée en ce qu'**au moins une partie du flux magnétique permanent (9') se ferme via le rotor à réluctance (2), via l'entrefer (3) et via une dent ferromagnétique sans enroulement (16') du stator (4).

7. Machine électrique selon la revendication 2, **caractérisée en ce qu'**au moins une partie du flux magnétique permanent (9') se ferme via le rotor à réluctance (2), via l'entrefer (3) et via un pôle électromagnétique (19, 20, 21, 22), notamment via au moins une dent (19', 20', 21', 22'), du stator (4).

8. Machine électrique selon la revendication 2, 3, 6 ou 7, **caractérisée en ce qu'**au moins un aimant permanent (7, 7', 7", 7"', 8, 8', 8", 8'") est disposé dans la région d'un pôle électromagnétique (19, 20, 21, 22).

9. Machine électrique selon la revendication 2, 3, 6, 7 ou 8, **caractérisée en ce qu'**au moins une dent (19', 20', 21', 22') porte au moins un aimant permanent (7, 7', 7", 7'", 8, 8', 8", 8"') prévu dans la région de l'entrefer (3).

10. Machine électrique selon la revendication 9, **caractérisée en ce qu'**au moins deux aimants permanents (7, 7', 7", 7"', 8, 8', 8", 8"') de polarité opposée (24, 25) sont prévus.

11. Machine électrique selon la revendication 2, 3, 6, 7 ou 8, **caractérisée en ce qu'**au moins une dent (19', 20', 21', 22') du stator (4) comprend au moins un évidement (33) avec un aimant permanent (7, 7', 8, 8') au moins partiellement logé.

12. Machine électrique selon l'une quelconque des revendications 1 à 11, **caractérisée en ce qu'**au moins un bobinage (37) de l'enroulement statorique (5) génère un flux de commande (6) pour une formation commune de couple et de force de charge radiale (M, F1, F2).

13. Machine électrique selon l'une quelconque des revendications 1 à 11, **caractérisée en ce que** le bobinage du stator (5) présente des enroulements (37, 38) qui peuvent être commandés séparément les uns des autres pour la formation du couple et pour la formation de la charge radiale (M, F1, F2).

14. Machine électrique selon l'une quelconque des revendications 1 à 13, **caractérisée en ce que** dans la section de réluctance, les flux de commande et de l'aimant permanent (6', 9') s'écoulent essentiellement dans un plan commun, de préférence radial.

15. Machine électrique selon l'une quelconque des revendications 1 à 14, **caractérisée en ce que** le stator (4) et/ou le rotor à réluctance (2) présentent, au moins dans une zone partielle, une denture (39) adjacente à l'entrefer (3).
